(19) Europäisches Patentamt
European Patent Office
Office européen des brevets

(11) Publication number: 0 130 731 A2

# (12) EUROPEAN PATENT APPLICATION

(21) Application number: **84304136.9**

(22) Date of filing: **19.06.84**

(51) Int. Cl.⁴: **C 08 G 77/20**, C 08 G 77/08, C 08 L 83/06, C 08 J 3/24, C 08 K 5/14

(30) Priority: **30.06.83 US 509568**

(43) Date of publication of application: **09.01.85 Bulletin 85/2**

(84) Designated Contracting States: **DE FR GB**

(71) Applicant: **LOCTITE CORPORATION, 705 North Mountain Rd., Newington, Connecticut 06111 (US)**

(72) Inventor: **Lin, Samuel Q. S., 1203 River Road, Apt. 4B, Edgewater New Jersey 07020 (US)**
Inventor: **Nakos, Steven T., 97 Boston Hill Road, Andover Connecticut 06232 (US)**

(74) Representative: **Marchant, James Ian et al, Elkington and Fife High Holborn House 52/54 High Holborn, London WC1V 6SH (GB)**

(54) **Methacrylated siloxanes.**

(57) Methacrylated siloxanes are prepared by hydrosilation of beta(allyloxy)ethyl methacrylate using a silicone hydride functional siloxane. Propene elimination is not a significant side reaction of the method. Methacrylated silicones prepared in accordance with the invention are capable of anaerobic cure.

EP 0 130 731 A2

# METHACRYLATED SILOXANES

This invention relates to polyorganosiloxane polymers (silicones) which have methacrylate functionality thereon.

Methacrylate functional organosiloxane compounds and polymers are desirable because they have faster and more versatile free radical cure characteristics than do the commercially available vinyl silicones. As described in U.S. Patents 2,956,004 and 4,035,355, methacrylate functional silicones can be formulated with other unsaturated monomers to give monomer compositions or cured polymers with unique and desirable properties. U.S. Patent 4,035,355 describes anaerobically curing compositions of methacrylate functional siloxane polymers. U.S. Patent 3,577,264 describes radiation curable film-forming paint binders utilizing acrylate or methacrylate functional siloxanes. Other patents describing methods of preparation or uses for methacrylate functional siloxanes include U.S. Patents 2,793,223; 2,898,361; 2,922,806 and 2,922,807, and 4,348,454 and U.K. Patents 1384 898 and 1323869.

In U.K. Patent 949,126 there are described hydrolyzable silane compounds used as adhesion promoters for glass fiber reinforcing materials, some of which are prepared by hydrosilation of allyl-functional methacrylates such as allyl-methacrylate and beta (allyloxy)ethyl methacrylate. However, it has been observed elsewhere that hydrosilation of allyl-substituted compounds can be complicated by competing side reactions such as propene elimination unless the reacting silicon hydride contains strong electron withdrawing groups such as chlorine or carboxyl. See Speier, J.L., et al., J.Am. Chem.Soc. 79 1974 (1957); and Ryan, J.W., et al.,J. Am, Chem. Soc., 82 3601 (1960).

In U.S. Patent 3,878,263 there are described acrylate and methacrylate functional siloxanes prepared from hydrolyzable acrylic functional silanes. The silanes may be prepared by hydrosilation of acrylic esters of unsaturated alcohols. Alternatively, the silanes may be prepared by reacting an alkoxy or hydroxy chloroalkyl silane with a tertiary amine salt or acrylic or methacrylic acid.

It is possible to prepare methacrylate functional silicones by hydrosilation of allyl methacrylate with silicon hydride functional polyorganosiloxane polymers, but, consistent with published reports on allyl hydrosilations, it has been observed that the process consistently yields a product in which about 30% of the methacrylate groups grafted onto the polymer are hydrolyzable. These groups are believed to have the following structure (where the hydrosilation groups were methylhydrosiloxane groups).

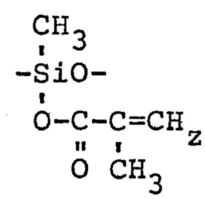

The presence of these hydrolyzable methacrylate groups produces a number of problems when the polymer is exposed to moisture, including loss of methacrylate functionality and increase in viscosity of the uncured polymer due to siloxy crosslinking.

The problem of propene elimination when allyl esters are hydrosilated is also recognized in U.S. Patent 3,767,690 to Speier where organosilicon cinnamates were prepared from allyl cinnamates and organosilicon compounds which have mercapto functionality instead of SiH functionality.

When methallyl methacrylate is substituted for allyl methacrylate the propene elimination problem is eliminated but hydrosilation occurs at both ends of the molecule.

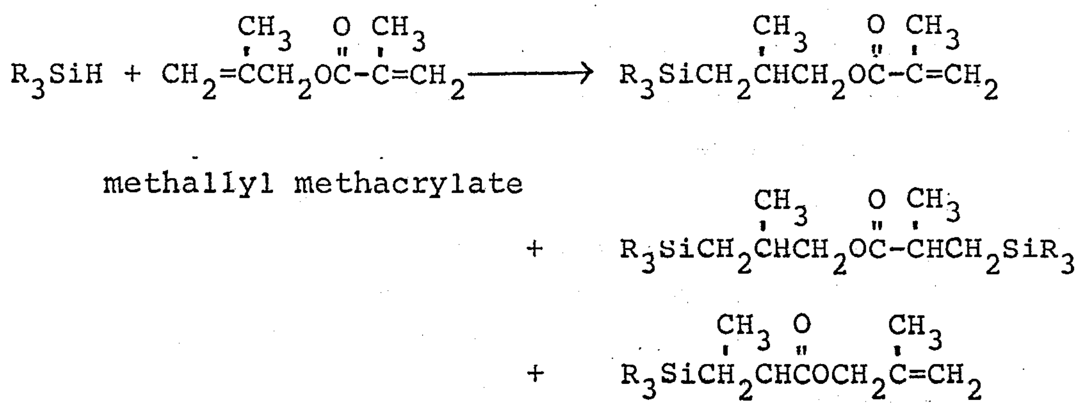

methallyl methacrylate

According to one aspect the present invention provides an organosiloxane compound containing at least two siloxy repeat units, characterised in that at least one of the said units has the formula

$$X-\overset{R_a}{\underset{}{Si}}O_{3-a/2}$$

where X is a methacryloxyethyleneoxypropylene group R is an organo group and a is 1 or 2.

The invention also provides a method of preparing such an organosiloxane compound characterised by reacting a siloxane having silicon hydride functionality and at least two repeat units, at least one of which has the formula

$$H-\overset{R_a}{\underset{}{Si}}O_{3-a/2}$$

with beta(allyloxy)ethyl methacrylate in the presence of a hydrosilation catalyst.

Thus the present invention encompasses a method of preparing methacrylate functional organosiloxanes by hydrosilation of an allyl functional methacrylate compound with a silicone hydride functional siloxane.

The allyl functional methacrylate which is used in the invention is beta(allyloxy)ethyl methacrylate which has unexpectedly been found to be successfully hydrosilated across the allyl double bond in substantially quantitative yield with no observable production of hydrolyzable methacrylate groups.

According to a further aspect the invention provides a curable composition comprising an organosiloxane compound as defined above in combination with an anaerobic acrylate cure system. The invention also includes a cured polymeric product which is produced by free radical curing of an organosiloxane as defined above or a curable composition as just defined.

In the accompanying drawings:

Figure 1 is a 60mhz NMR scan of a methacrylated polydimethylsiloxane prepared from allylmethacrylate.

Figure 2 is a 60mhz NMR scan of a methacrylated polydimethylsiloxane prepared from beta(allyloxy)ethyl methacrylate.

The hydrosilation of beta(allyloxy)ethyl methacrylate may be accomplished with silicon hydride functional siloxane polymers or low molecular weight analogs such as 1,3,5,7-tetramethylcyclotetrasiloxane and tetramethyldisiloxane. A noble metal hydrosilation catalyst is used, preferably a platinum catalyst. Reaction temperatures should be kept below about 100°C in order to prevent thermal polymerization of the methacylate groups.

Examples 1, 2 and 3 describe synthesis with tetramethyldisiloxane, a commercially available silicone hydride functional siloxane polymer and a specially synthesized SiH functional polyorganosiloxane, respectively.

<u>Example 1</u>

4.0 grams tetramethyldisiloxane (0.03 moles) in 10 ml toluene was added gradually to a moisture

protected flask containing 20.0 grams beta(allyloxy) ethyl methacrylate (0.12 moles), 0.50 grams 2% $H_2PtCl_6$. $6H_2O$ in butyl acetate and 0.05 grams phenothiaziane in 50ml toluene.

The reaction was heated to 80°C, producing an exotherm between 85°C and 89°C for one hour. After the exotherm subsided, temperature was maintained at 80°C for three additional hours when an IR scan showed no SiH stretch at $2200cm^{-1}$. The mixture was cooled, stripped with a rotary evaporator to remove toluene and deep-stripped at 80°C and 0.35 mm.

This product had a tendency to polymerize during the deep-strip operation indicating that additional polymerization inhibitor should be added prior to the deep-stripping step.

Example 2

5.0 grams of a commercially available 2500MW polydimethylsiloxane having 7 methyl hydrosiloxane units per molecule randomly distributed, (0.128 moles SiH), 2.18 grams beta-(allyloxy)ethyl methacrylate (0.128 moles) and 0.5 grams of a 2% solution of chloroplatininc acid in butyl acetate were mixed with 25 mls toluene and 0.3 grams hydroquinone and heated to 70°C under dry hydrogen for three hours. At the end of this time, IR showed no SiH stretch at $2200cm^{-1}$. The mixture was cooled, stirred overnight with 2 grams activated basic alumina and then filtered through Celite, stripped to remove solvent, and deep-stripped to give 6.50 grams product.

The ability of this product to cure with an anaerobic acrylic cure system was demonstrated as follows.

5 grams of product was mixed with 2 drops (about 0.2g) of cumene hydroperoxide, 1 drop of a 50% solution of saccharin in dimethylsulfoxide and 1 drop of dimethyl-p-toluidine. The mixture was applied to 6 strips of one inch (2.54cms) wide sandblasted steel which were overlapped at a 90° angle by six additional one inch (2.54cm) wide steel strips, three of which had been primed with a commercial primer based on mercaptobenzothiazole and dimethyl-p-toluidine. After 24 hours at room temperature, all had fixtured. There were no gross differences between the primed and umprimed sets, demonstrating that the methacrylated silicone products of the invention are capable of anaerobic cure on steel.

Example 3

A polydimethylsiloxane polymer having a theoretical molecular weight of 20,000 and 6.8 methylhydrosiloxane units per molecule was prepared by stirring at room temperature for 2 days a mixture of 50.00 grams octamethylcyclotetrasiloxane, 1.06 grams tetramethylcyclotetrasiloxane, 0.42 grams hexamethyldisiloxane and 0.13 grams trifluoromethane sulfonic acid. After 2 days the mixture was diluted with 150 ml ether and washed with 3 grams $NaHCO_3$ in 50 ml water. The organic layer was washed twice with 50 ml water portions, dried over sodium sulfate, filtered and stripped to give 47.1 grams of product.

A methacrylated silicone in accordance with the invention was prepared from the polymer of the previous paragraph by mixing 10.00 grams of polymer, 0.51 grams beta-(allyloxy)ethyl methacrylate, 0.5 grams of a 2% chloroplatinic acid solution in butyl acetate and 0.03 grams hydroquinone with 25 ml toluene and heating the mixture to 70°C under $N_2$ with stirring for 3 hours. The reaction mixture was then stirred overnight at room temperature with activated basic alumina. The alumina was filtered off through Celite, stripped

to remove solvent and then deep-stripped as in Examples 1 and 2 to give 8.9 grams of a light brown product.

Example 4

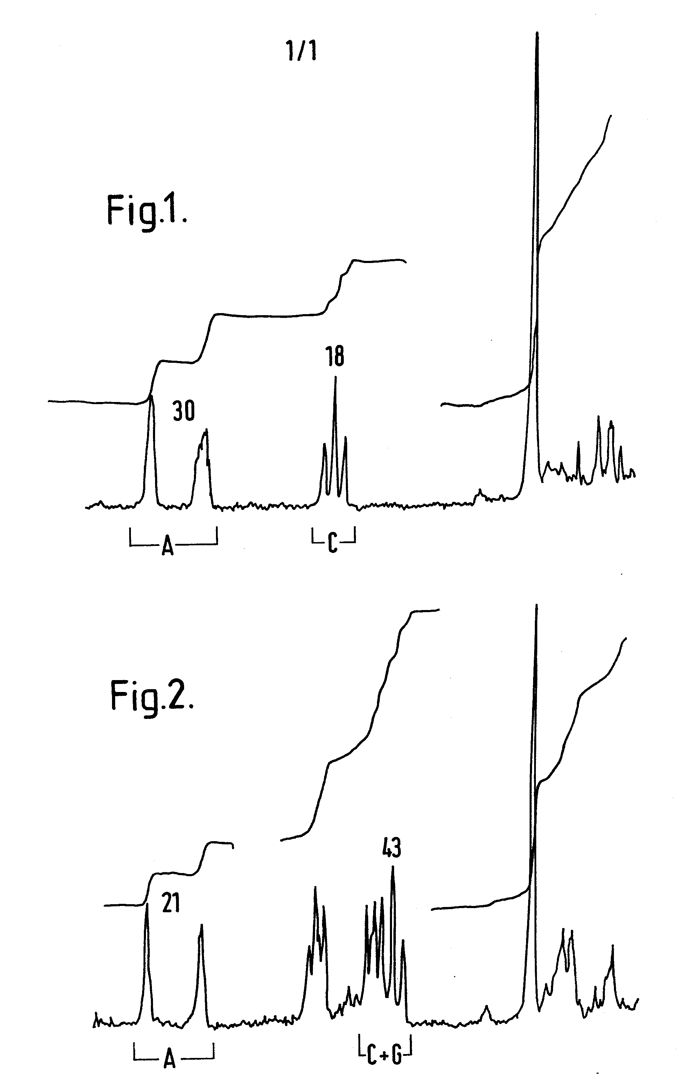

Allyl methacylate and beta(allyloxy)ethyl methacylate were compared for propene elimination during hydrosilation as follows. Both esters were hydrosilated with a silicon hydride functional polydimethylsiloxane as in Example 2 except that mol ratios of esters to SiH were 1.05/1 and activated alumina was not used in the workup. MNR scans of the products were obtained using a 60 mhz NMR. The portions of those scans between about 1 and 7 $\delta$ are shown in Figures 1 and 2 for the allyl methacrylate and beta(allyloxy) ethyl methacrylate products, respectively. The hydrogen atoms were labeled as follows for the two products:

(B)
(A) $CH_3O$ (c) (D) (E)
$CH_2=C$ $C-O-CH_2CH_2CH_2Si-$

(B)
(A) $CH_3O$ (F) (G) (C) (D) (E)
$CH_2=C$ $COCH_2CH_2O-CH_2CH_2CH_2-Si-$

The NMR scan of the allyl methacrylate product, Figure 1, gave a clean separation between methacrylate methylene group A and propyl methylene group C as shown in Figure 1. Integration of these peaks gave a ratio of C/A=18/30. The theoretical ratio is 1/1, indicating substantial propene elimination. The methacryloxy siloxane product resulting from the propene elimination was further evidenced by the strong methacrylic acid odor which the product developed when

exposed to atmospheric moisture overnight.

The NMR scan of the beta(allyloxy)ethyl methacrylate product, Figure 2, showed clean separation for the methacrylate methylene hydrogens (A) and a complex combined peak for propyl and ethyl methylene hydrogens (C) and (G). The theoretical ratio of C and G to A was 2/1. The ratio found was 43/21, demonstrating that propene elimination did not occur.

In addition to the chloroplatinic acid used in the examples above, other hydrosilation catalysts may be used in the preparation of the siloxanes of the invention. Examples are platinum, hydrocarbon platinum complexes and rhodium complexes. Platinum based catalysts are preferred at levels from 10 ppm to 500 ppm platinum, preferably from 50 ppm to 300 ppm.

CLAIMS

1. An organosiloxane compound containing at least two siloxy repeat units, characterised in that at least one of the said units has the formula

$$X-\overset{\displaystyle R_a}{\overset{|}{Si}}O_{3-a/2}$$

where X is a methacryloxyethyleneoxypropylene group, R is an organo group and a is 1 or 2.

2. An organo siloxane as claimed in claim 1 characterised in that it is a polyorganosiloxane with a molecular weight of 2500 or more.

3. A polyorganosiloxane as claimed in claim 2, characterised by a molecular weight of at least 20,000.

4. A compound as claimed in any of claims 1 to 3 characterised in that it contains a plurality of the said methacryloxyethyleneoxypropylene groups.

5. A compound as claimed in any of claims 1 to 4, characterised in that R is a hydrocarbon group.

6. A compound as claimed in claim 5, characterised in that R is methyl.

7. A compound as claimed in any of claims 1 to 6, further characterised by a plurality of dimethylsiloxane repeat units.

8. A method of preparing an organosiloxane compound as claimed in any of claims 1 to 7, characterised

by reacting a siloxane having silicon hydride functionality and at least two repeat units, at least one of which has the formula

$$H\text{-}\overset{R_a}{\overset{|}{Si}}O_{3-a/2}$$

with beta(allyloxy)ethyl methacrylate in the presence of a hydrosilation catalyst.

9. A method as claimed in claim 8, characterised in that the hydrosilation catalyst is a platinum or rhodium-based catalyst.

10. A method as claimed in claim 9, characterised in that the catalyst is chloroplatinic acid, platinum or a hydrocarbon platinum complex.

11. A method as claimed in any of claims 8 to 10, characterised in that the silicon hydride functional siloxane is tetramethyldisiloxane, 1,3,5,7-tetramethylcyclotetrasiloxane or a polydimethyl silicone containing a plurality methyl hydrogen repeat units.

12. A curable composition characterised in that it comprises a compound as claimed in any of claims 1 to 7 in combination with an anaerobic acylase cure system.

13. A composition as claimed in claim 12, characterised in that the anaerobic cure system comprises a peroxy initiator.

14. A composition as claimed in claim 12 or 13 characterised in that it further comprises a sulfimide

and a tertiary aromatic amine.

15. Cured polymeric product characterised in that it is produced by free radical curing of a compound as claimed in any of claims 1 to 7 or a composition as claimed in any of claims 12 to 14.

Fig.1.

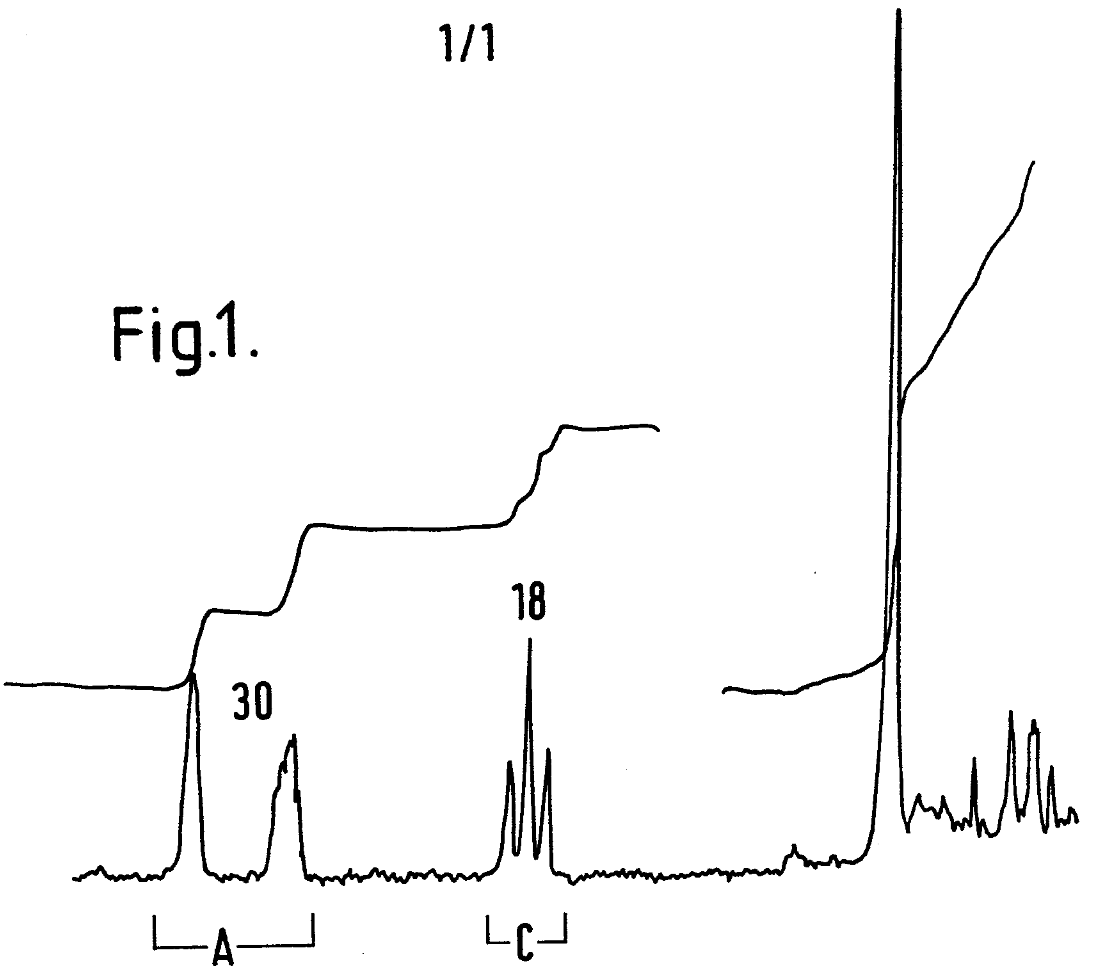


Fig.2.